# EUROPEAN PATENT APPLICATION

(11) **EP 2 075 757 A2**
(43) Date of publication of application: **01.07.2009**
(21) Application number: 08021378.8
(22) Date of filing: 09.12.2008
(51) Int. Cl.: G06T 5/00

(54) **Image processing device and image processing program**

(30) Priority: 20.12.2007 JP 2007328940
(71) Applicant: Nikon Corporation, Chiyoda-ku Tokyo 100-8331 (JP); Sapporo Medical University, Hokkaido 060-8556 (JP)
(72) Inventor: Tomotaka, Shinoda, Tokyo 100-8331 (JP); Toshihiro, Mitaka, Sapporo-shi Hokkaido 060-8556 (JP); Satoshi, Mori, Sapporo-shi Hokkaido 060-8556 (JP); Naoki, Watanabe, Sapporo-shi Hokkaido 060-8556 (JP); Hideki, Ito, Sapporo-shi Hokkaido 060-8556 (JP)
(74) Representative: Zeitler - Volpert - Kandlbinder

(57) **Abstract**

There are provided an information acquiring unit that subjects RGB data of each pixel of a color image to HSI conversion and finds color information including at least saturation (S) from each pixel of the color image and a first converting unit that converts the color information of each pixel by shifting the saturation (S) of each pixel of the color image by a predetermined amount. For example, the information acquiring unit acquires hue (H) and intensity (I), additionally to the saturation (S), from each pixel of the color image as color information and the first converting unit shifts the intensity of each pixel so that the center of a hue distribution obtained by plotting the hue (H), the saturation (S), and the intensity (I) of each pixel in a color space coordinate system having a hue axis, a saturation axis, and an intensity axis, moves toward the intensity axis.

## Description

### BACKGROUND

### 1. Field

The present invention relates to an image processing device and an image processing program that process a color image.

### 2. Description of the Related Art

In order to accurately diagnose various diseases of animals including humans, diagnoses of pathological tissues and cells are indispensable. Among others, information about kinds, numbers and shapes of cells included in blood and bone marrow is indispensable in many diagnoses of diseases, and therefore, cells are collected from blood and bone marrow and specimens are obtained and then a technical expert observes differences in shapes and color tones of the cells using a microscope and judges the kinds and anomalies of individual cells. Such tasks (in which a technical expert directly looks into a microscope and makes a judgment manually based on his/her own experience) are carried out routinely in an inspection room of hospitals all over the world.

For example, the measurement of the number of eosinophils in blood gives critical information for diagnoses of allergic diseases. The number of eosinophils has increased in blood of patients of pollinosis and asthma. For the diagnoses, blood is collected from a patient and the blood is smeared and fixed onto a slide glass, and then a technical expert observes the Giemsa-stained specimen by using a microscope with a magnification of 1,000 (liquid immersion). Then, the technical expert diagnoses based on the existence of eosinophilics (reference: "Kensa To Gijutsu (Inspection and Technique)", extra number, vol. 28, No. 7, 2000, IGAKU-SHOIN Ltd., "Standard Kensa ketsueki-Gaku (Standard Laboratory Hematology)", compiled by The Japanese Society for Laboratory Hematology, Ishiyaku Publishers, Inc., 2003, 1 st edition).

On the other hand, thanks to the recent development of digital technologies, each element of a microscopic image is converted into digital information and it is made possible not only to directly project an image on a screen but also to process the image in a variety of ways using software. If the task of judgment based on the experience of a technical expert is generalized into a method by which any one can make a distinction, it is made possible to considerably reduce the time and costs for the task.

In such circumstances, a color image of a stained specimen is taken in and pathological diagnoses of the specimen are made based on the image. It is normal to identify the kinds of individual cells based on the differences in forms of specimen images that appear in the image (for example, refer to Clinical & Laboratory Haematology 2003, vol. 25, pp.139-147, "Differential counting of blood leukocytes using automated microscopy and a decision support system based on artificial neural networks - evaluation of DiffMaster Octavia"). Instead of the diagnosis based on the differences in forms of specimen images, it is also proposed to identify the kinds of individual cells by plotting the values of each pixel of a color image of specimen in a predetermined color space and distinguishing the color differences for each kind of cell based on the sub-volume occupied by the values of each pixel in the color space (for example, refer to Published Japanese Translation of PCT international Publication for Patent Application No. 2003-506796).

The method, in which color difference for each kind of cells is distinguished based on the sub-volume in the color space, is however an indirect method. Recently, it is desired to directly distinguish the color difference for each kind of cells in a color image (real image) of specimen and make a diagnosis based on the color difference. However, the color difference for each kind of cells in a real image is extremely small and it is not possible to explicitly distinguish the color difference on the real image.

### SUMMARY

A proposition of the present invention is to provide an image processing device and an image processing program that have made it possible to clarify a slight color difference in a color image (real image) of specimen.

In order to solve the above problems, an image processing device of a first invention includes an information acquiring unit that converts RGB data of each pixel of a color image into HSI data and finds color information including at least saturation (S) from each pixel of the color image, and a first converting unit that converts the color information of each pixel by shifting the saturation (S) of each pixel of the color image by a predetermined amount.

In a second invention, the information acquiring unit acquires hue (H) and intensity (I) as the color information from each pixel of the color image, in addition to the saturation (S), and the first converting unit shifts the intensity of each pixel so that the center of a hue distribution, which is obtained by plotting the hue (H), the saturation (S), and the intensity (I) of each of the pixels in a color space coordinate system having a hue axis, a saturation axis, and an intensity axis, moves toward the intensity axis, in the first invention.

A third invention includes a detecting unit that detects a mode value of the hue of each pixel shifted by the first converting unit by a predetermined amount, and a second converting unit that converts the color information of each pixel by changing the hue of each pixel of the color image in accordance with a difference between a boundary value of the two predefined hues and the mode value, in the second invention.

In a fourth invention, the information acquiring unit finds the color information of each of the pixels using a color image after having been subjected to negative-positive reversal, in any of the first to third inventions.

In a fifth invention, the color image is a photographed image of eosinophil, in any of the first to fourth inventions.

An image processing program of a sixth invention causes a computer to execute a processing operation converting RGB data of each pixel of a color image into HSI data and finding color information including at least saturation (S) from each pixel of the color image, and a processing operation converting the color information of each pixel by shifting the saturation (S) of each pixel of the color image by a predetermined amount.

### EFFECTS

According to the image processing device and the image processing program of the present invention, it is possible to clarify a slight color difference in a color image (real image) of specimen.

### BRIEF DESCRIPTION OF THE DRAWINGS

Fig. 1 is a block diagram showing an outline of a configuration of an inspection apparatus 10.
Fig. 2 is an explanatory diagram showing an example of a specimen.
Fig. 3 is a diagram showing an example of a data path when processing a color image.
Fig. 4 is a schematic diagram of a color image after having been subjected to negative-positive reversal.
Fig. 5 is an explanatory diagram in which the values (hue/saturation/intensity) of each pixel after having been subjected to HSI conversion are plotted in a predetermined color space.
Fig. 6 is an explanatory diagram in which the saturation has been subjected to shift processing among the values of each pixel plotted in a color space.
Fig. 7 is an explanatory diagram of the rotation of a hue H30 after the saturation has been shifted.
Fig. 8 is a flowchart showing a processing operation of a color image in an image processing device 12 in the present embodiment.
Fig. 9 is an explanatory diagram showing an example of a color image of a bone marrow specimen including Giemsa-stained eosinophil.
Fig. 10 is an explanatory diagram showing an example of a color image of a bone marrow specimen including Giemsa-stained eosinophil after having been subjected to the saturation shift processing and the hue conversion processing.

### DETAILED DESCRIPTION OF THE EMBODIMENTS

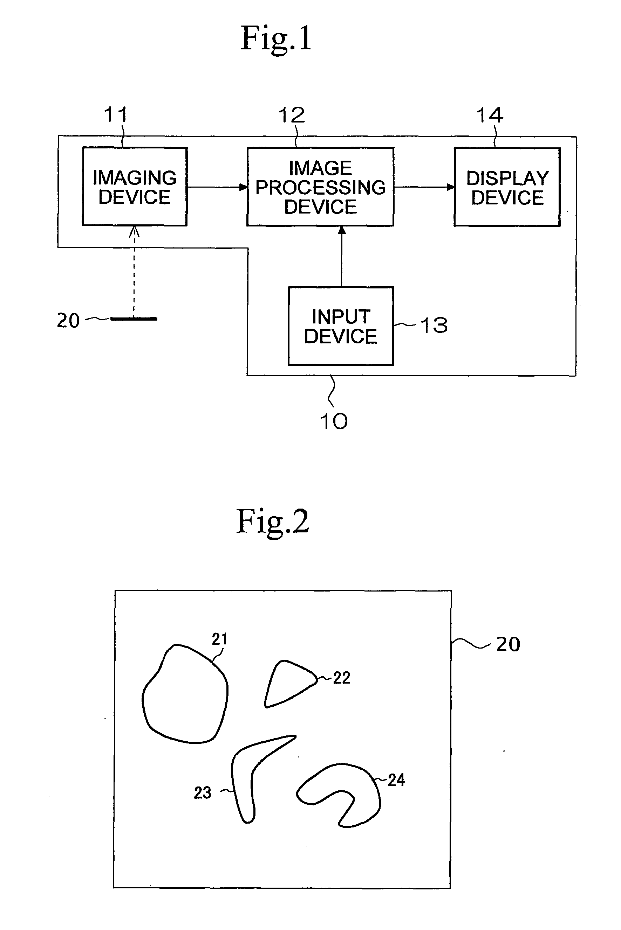

Fig. 1 is a functional block diagram showing a configuration of an inspection apparatus 10. The inspection apparatus 10 is used for pathological diagnosis of a specimen 20. The specimen 20 is, for example, a specimen of Giemsa-stained blood, including a plurality of cells 21 to 24, as shown in Fig. 2.

The inspection apparatus 10 is provided with an imaging device 11, such as a digital camera, an image processing device 12, an input device 13, and a display device 14. In the inspection apparatus 10, the imaging device 11 photographs the specimen 20 and outputs a color image (RGB image) of the specimen 20 to the image processing device 12.

The image processing device 12 takes in the color image of the specimen 20 and processes the color image. In processing, a user instruction from the input device 13 is referred to as the need arises. In addition, the color image during or after processing is output to the display device 14 as the need arises.

The image processing device 12, for example, may be a computer in which an image processing program is installed. To install the image processing program, it is recommended to use a recording medium (CD-ROM etc.) in which the image processing program is recorded. Alternatively, it may also be possible to use carrier waves (including the image processing program) that can be downloaded via the Internet.

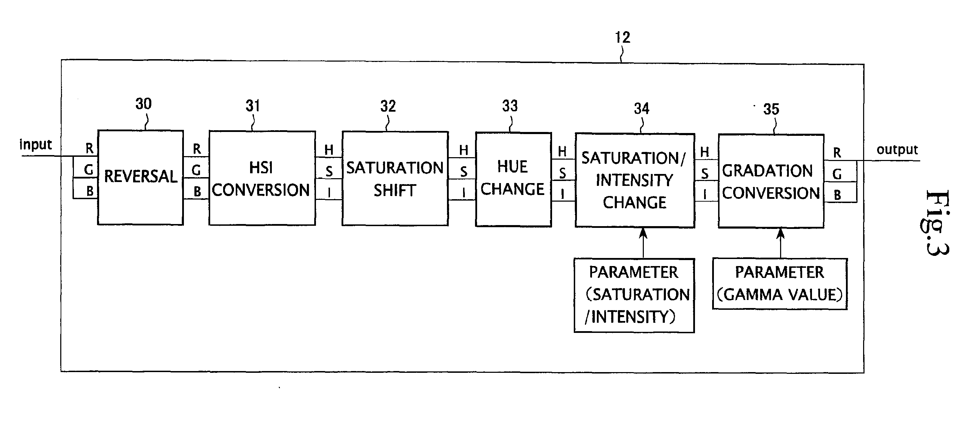

In the image processing device 12, the following processing (processing shown in Fig. 3) is executed.
1) Negative-positive reversal processing (block 30 in Fig. 3)
2) HSI conversion processing (block 31 in Fig. 3)
3) Saturation shift processing (block 32 in Fig. 3)
4) Hue change processing (block 33 in Fig. 3)
5) Saturation/intensity change processing (block 34 in Fig. 3)
6) Gradation conversion processing (block 35 in Fig. 3)

An image to be processed in the image processing device 12 may be a color image (RGB image) of the specimen 20.

### 1) Negative-positive reversal processing

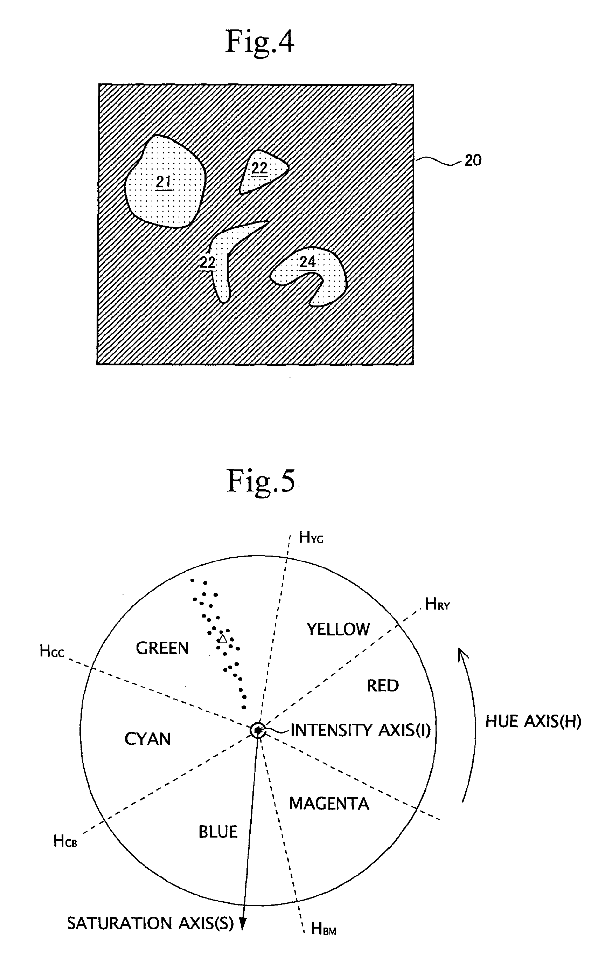

This is processing of negative-positive reversal of a color image of the specimen 20 having been taken in. For example, in the color image before the reversal, the purple cells 21 to 24 are distributed in the white background and in the color image after the reversal, the green cells 21 to 24 are distributed in the black background (the hatched portion in Fig. 4). Because each image is a real image, the color difference for each kind of cell is extremely slight. As a result, it is difficult to explicitly distinguish the color difference for each kind of cell on the real image. The schematic diagram of the color image after the negative-positive reversal is shown schematically. In Fig. 4, to show that the color difference for each kind of cell is extremely slight, the cells 21 to 24 are hatched in the same way.

### 2) HSI conversion processing

In the HSI conversion processing, based on each color component of red, green, and blue (RGB) of each pixel of the color image having been subjected to the negative-positive reversal processing, the hue (H), the saturation (S), and the intensity (I) of each pixel are found as color information of the pixel.

The values (hue/saturation/intensity) of each pixel after the HSI conversion obtained as color information are plotted in a predetermined color space as, for example, "." in Fig. 5. Fig. 5 shows a color space in which the circumferential direction in the plane of the paper denotes the hue axis (H), the radial direction denotes the saturation axis (S), and the direction perpendicular to the plane of the paper denotes the intensity axis (I). It can be seen that the plot positions of the values (hue/saturation/intensity) of each pixel are distributed near the center in the direction of the hue axis (H) in the green area.

### 3) Saturation shift processing

This is processing of shifting the value of saturation among the values (hue/saturation/intensity) of each pixel obtained by the HSI conversion by a predetermined amount. For example, by plotting the values of each pixel in the above-described color space, the hue distribution of each pixel is obtained, and therefore, the center of hue distribution (Δ shown in Fig. 5) is found. Then, the value of saturation of each pixel is shifted so that the center of hue distribution coincides with the intensity axis. By shifting the value of saturation, the values of hue, intensity, etc., that is, color information of each pixel, are converted. In the saturation shift processing, it is not necessarily required to shift so that the center of hue distribution of each pixel coincides with the intensity axis but it may also be possible to shift the saturation so that the number of the hues of each pixel increases.

### 4) Hue change processing

This is processing of changing the hue of each pixel the saturation of which has been shifted. The content of changing the hue of each pixel is that after the mode value of the hue that is most densely distributed is detected in the hue distribution after the saturation has been shifted, the hue is rotated so that the hue overlaps one of color boundaries (for example, any one of color boundaries H_{RY}, H_{YG}, H_{GC}, H_{CB}, H_{BM}, and H_{MR}) and thus the hue of each pixel of the entire image is changed. A color boundary is a boundary value between two predefined hues.

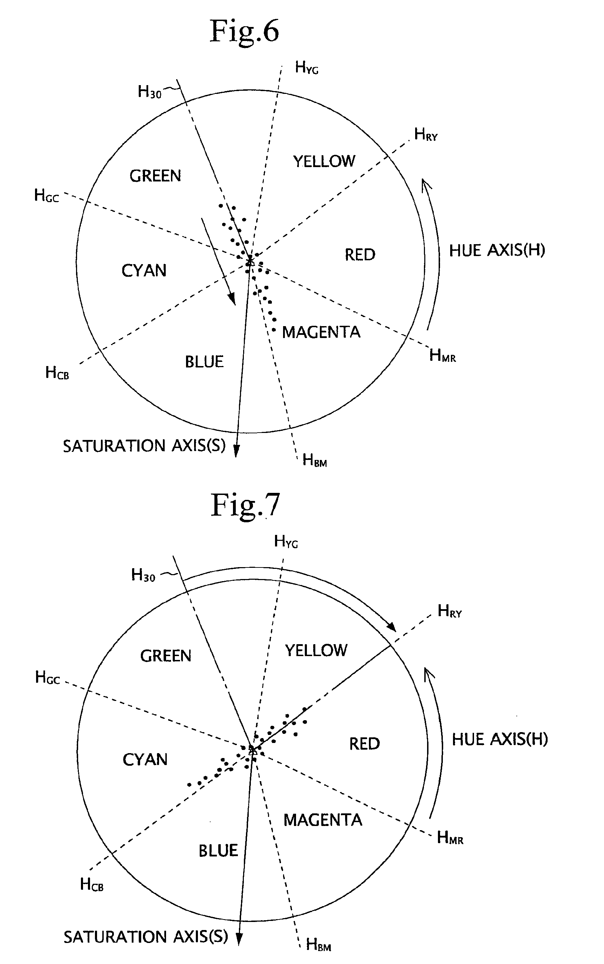

As shown in Fig. 6, when the hue that is most densely distributed is green, the mode value is H₃₀. In this case, as shown in Fig. 7, an example is shown, in which the hue of each pixel is changed by rotating the hue H₃₀ so that it overlaps the boundary value between the red area and the yellow area (that is, the color boundary H_{RY}). In this case, the hue of each pixel is changed in accordance with the difference between the hue H₃₀ and the color boundary H_{RY} (the angular difference in the direction of the hue axis (H)). By changing the hue in this manner, the hue distribution of each pixel in the color space is converted, and a state where the plot positions of each pixel are distributed in many colors is brought about.

After the hue is changed, by finding each color component of red, green, and blue (RGB) of each pixel based on the values (hue/saturation/intensity) of each pixel, it is possible to produce a color image (real image) in which the color difference for each kind of cell is clear.

### 5) Saturation/intensity change processing

In order to further clarify the color difference in the color image (real image), the saturation/intensity change processing is carried out. In this saturation/intensity change processing, among the values (hue/saturation/intensity) of each pixel plotted in the color space, a plurality of target pixels indicative of different values from one another is extracted as samples and the saturation/intensity of each pixel are changed so that the target pixels extracted as samples become most distant from one another in the three-dimensional color space.

Specifically, distances (sample distances) between the plurality of target pixels in the color space described above are calculated and the same calculation is repeated while maintaining the parameter of the hue of each pixel constant and changing the parameters of the saturation/intensity. Then, when the parameters of the saturation/intensity with which the sample distance is maximum are found, the saturation and the intensity of each pixel of the entire image are changed using the parameters.

### 6) Gradation conversion processing

The gradation conversion processing is, for example, processing of converting the values (hue/saturation/intensity) of the target pixel the saturation/intensity of which have been changed into each color component of red, green, and blue (RGB) and carrying out gamma table conversion for each converted color component of red, green, and blue (RGB). That is, the data of the gradation conversion table corresponding to the gradation conversion curve of a predefined gamma value is read and the gradation of each color component of red, green, and blue (RGB) is converted using the table. As the distance between the target pixels becomes longer, the color difference in the real image becomes larger, and therefore, a gamma value with which the target pixels become most distant from one another is found and then the gradation of each color component of red, green, and blue (RGB) of each pixel is converted using the gradation conversion table of the gamma value. Then, the color image (real image) of the specimen 20 having been subjected to the gradation conversion processing is output to the display device 14 as a final result.

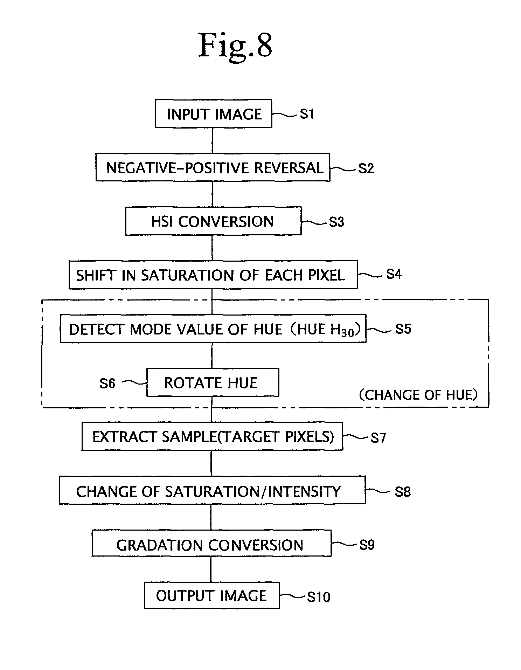

Next, the flow of image processing is explained based on the flowchart shown in Fig. 8.

Step S1 is processing of taking in the color image of the specimen 20, that is, image input processing. When the image input processing in this step S1 is completed, image processing shown in steps S2 to S9 is carried out.

Step S2 is processing of negative-positive reversal of an input color image. After the processing of the input color image is carried out, the operation proceeds to step S3.

Step S3 is HSI conversion processing. By the HSI processing, each color component of RGB of the color image having been subjected to the negative-positive conversion is converted into each component of HSI.

In step S4, each pixel is plotted at the coordinates in the above-described color space using the color information (hue, saturation, and intensity) of each pixel of the color image having been subjected to the HSI conversion. By plotting all of the pixels of the color image in the color space, the hue distribution of all of the pixels can be obtained. From this hue distribution, the center position is found and then the saturation of each pixel is shifted so that the center position coincides with the intensity axis.

For example, as shown in Fig. 5, when each pixel is plotted in the color space, if all of the pixels are distributed in the green range, the center position of the hue distribution is the position indicated by a mark Δ. By shifting the saturation of each pixel (in the direction of the arrow in Fig. 6) so that the center position coincides with the intensity axis, all of the pixels that have been distributed in the green area are distributed not only in the green area but also in the areas of other hues (refer to Fig. 6). When this step S4 is completed, the operation proceeds to the hue change processing (steps S5, S6).

Step S5 is processing to find the mode value of a hue. By carrying out the processing of step S4, for example, a hue in an area where the number of plotted values is largest in the hue distribution of all of the pixels distributed in each color area is detected as the mode value of the hue. In the case of Fig. 6, the number of distributed pixels is largest in the green area, and therefore, for example, H₃₀ is detected as the mode value of the hue in this case. After the mode value of the hue is detected, the operation proceeds to step S6.

Step S6 is processing to rotate the hue. In step S5, the mode value of the hue is detected as H₃₀, and therefore, the mode value H₃₀ of the hue is rotated so as to, for example, coincide with the color boundary H_{RY} (refer to Fig. 7). By rotating the mode value H₃₀ of the hue, the hue of each pixel is changed.

After the processing of step S6 is completed, the operation proceeds to step S7, in which samples (target pixels) are extracted automatically or by user's selection.

Step S8 is saturation/intensity change processing. In this step S8, the saturation/intensity of each pixel are changed so that the target pixels extracted as samples become most distant from one another in the three-dimensional color space.

Step S9 is gradation conversion processing. In the gradation conversion processing, for example, the values (hue/saturation/intensity) of the target pixel the saturation/intensity of which have been changed are converted into each color component of red, green, and blue (RGB) and each converted color component of red, green, and blue (RGB) is subjected to the gamma table conversion. Then, a gamma value with which the distance between the target pixels is longest is found, and the gradation of each color (R, G, B) component of each pixel is converted using the gradation conversion table of the gamma value.

Step S10 is processing to output the color image having been subjected to the gradation conversion. When this step S10 is carried out, for example, the color image having been subjected to the gradation conversion is output to the display device 14. The color image output to the display device 14 will be a color image the color difference between cells has been clarified.

By changing the saturation of each pixel of the entire image using the image processing device 12 in the present embodiment, the hue is also changed, and therefore, it is possible to clarify the slight color difference in the color image (real image) of the specimen 20.

Consequently, the blood cells having substantially the same color when input are classified into each kind according to color and it is made possible to directly distinguish the color difference for each kind of cell in the color image (real image) of the specimen 20 and to diagnose the specimen 20 by color difference (to identify the individual kinds of cell).

In the diagnosis by the color difference, the standards for judgment are easy-to-see compared to the diagnosis by the difference in cell shapes. As a result, it is possible for a person having no special knowledge about the cell shapes to make a diagnosis with ease. Further, the time required for the diagnosis can be shortened compared to the diagnosis by difference in cell shapes, and the variations in results due to the difference in skill and experience of a person who makes a diagnosis can also be reduced. In addition, it is easy to apply it to an automatic judgment using a computer.

Further, the diagnosis by the difference in cell shapes requires a magnification of about, for example, 1,000 (eyepiece 10 × objective 100) of the image of specimen, and therefore, it is necessary to establish a liquid immersion (oil immersion) state between the objective lens (not shown) and the specimen 20 and the labor and time used to be required to take in the color image of the specimen 20. However, in the present embodiment, the diagnosis is made by the color difference, and therefore, detailed information about the cell shapes is not necessary. As a result, the magnification of the specimen image can be reduced (for example, about ×400) and the liquid immersion state between the objective lens and the specimen 20 is no longer necessary. Consequently, it is possible to take in the color image of the specimen 20 both easily and quickly.

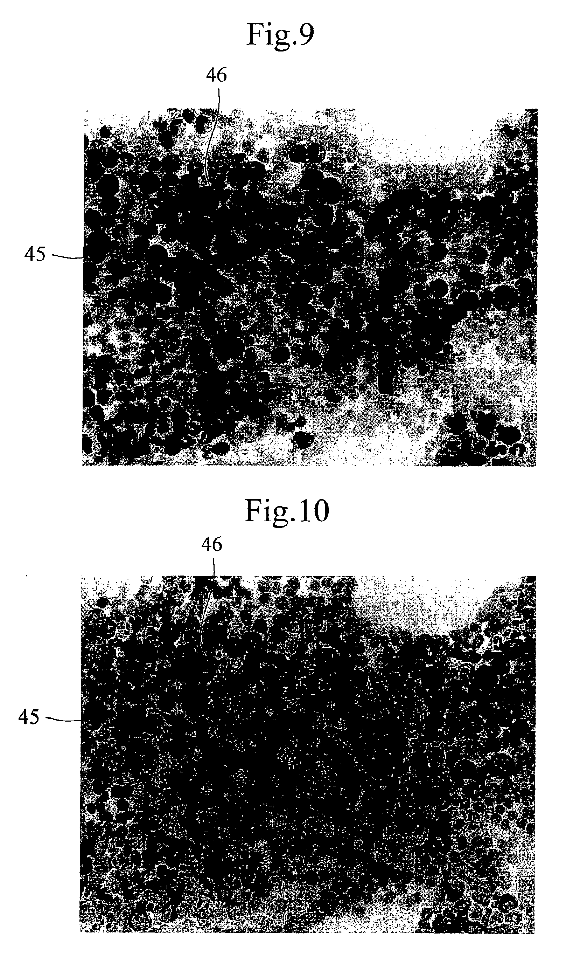

The image processing device described above can also be used when, for example, the specimen 20 is a bone marrow specimen including Giemsa-stained eosinophil. As shown in Fig. 9, a color image (real image) output from the imaging device 11 to the image processing device 12 is a photographed image of the specimen 20, a bone marrow specimen. In the photographed color image of the specimen 20, it can be seen that many cells are distributed. The many cells include eosinophils, however, the cells of the eosinophils are the same color as that of other cells (for example, reddish purple, or bluish purple) and the color difference for each kind of cell is extremely slight. That is, it is difficult to explicitly distinguish the color difference for each kind of cell on the color image because cells 45, 46 are eosinophils, however, the color of the cells of eosinophils and the color of other cells are shown in a similar color (reddish purple, bluish purple, etc.).

When the color image obtained by photographing the specimen 20 is subjected to the processing in steps S3 to S9 in Fig. 8, the color of the many cells described above changes into different colors according to each kind of cell (refer to Fig. 10). For example, the color of the cytoplasm of the cells 45, 46, which are eosinophils, changes from bluish purple to green and the color of other cells changes into different colors (for example, pink) according to each kind of cell.

According to the above, when a bone marrow specimen including Giemsa-stained eosinophils is an object of the pathological diagnosis, it is possible to directly distinguish eosinophils from other cells by the color difference in the color image having been subjected to the image processing described above. As a result, it is possible to make a diagnosis based on the easy-to-see standards of judgment, that is, the color difference for each kind of cell.

In the present embodiment, the saturation shift processing of each pixel is carried out after the HSI conversion processing, however, this is not limited, but it is also possible to carry out, for example, before the HSI conversion processing or after the hue conversion processing.

In the present embodiment, a color image is subjected to the negative-positive conversion processing, however, it is possible to disperse the hue of each pixel centralized to a specific hue into a plurality of hues by shifting the saturation, and therefore, it is not necessarily required to subject a color image to the negative-positive conversion processing.

In the present embodiment, the hue conversion processing is carried out after the saturation shift processing of each pixel is carried out, however, there is a case where the hue of each pixel is dispersed in the area of each hue by carrying out the saturation shift processing, and therefore, it is not necessarily required to carry out the hue conversion processing. That is, when detailed information about the shapes of cells is not necessary for the observation of a specimen, it is possible to easily make a diagnose by color difference only by carrying out the saturation shift processing and observe a specimen or take in a color image without the need to increase the magnification of the specimen image.

In the present embodiment, an example is explained, in which the color image input to the image processing device 12 is an RGB image, however, the present invention is not limited to this. The present invention can also be applied when the color image is a YCbCr image. In this case, after the YCbCr image is converted into an RGB image, the processing of S2 to S9 shown in Fig. 8 is carried out.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

## Claims

1. An image processing device, comprising:
an information acquiring unit that subjects RGB data of each pixel of a color image to HSI conversion and finds color information including at least saturation (S) from each pixel of the color image; and
a first converting unit that converts the color information of each pixel by shifting the saturation (S) of each pixel of the color image by a predetermined amount.

2. The image processing device according to claim 1, wherein:
the information acquiring unit acquires hue (H) and intensity (I), in addition to the saturation (S), from each pixel of the color image as the color information; and
the first converting unit shifts the intensity of each pixel so that the center of a hue distribution, which is obtained by plotting the hue (H), the saturation (S), and the intensity (I) of each of the pixels in a color space coordinate system including a hue axis, a saturation axis, and an intensity axis, moves toward the intensity axis.

3. The image processing device according to claim 2, further comprising:
a detecting unit that detects a mode value of the hue of each pixel shifted by the first converting unit by a predetermined amount; and
a second converting unit that converts the color information of each pixel by changing the hue of each pixel of the color image in accordance with a difference between a boundary value of the two predefined hues and the mode value.

4. The image processing device according to any one of claims 1 to 3, wherein:
the information acquiring unit finds the color information of each of the pixels using a color image after having been subjected to negative-positive reversal.

5. The image processing device according to any one of claims 1 to 4, wherein:
the color image is a photographed image of eosinophil.

6. An image processing program that causes a computer to execute:
a processing operation subjecting RGB data of each pixel of a color image to HSI conversion and finding color information including at least saturation (S) from each pixel of the color image; and
a processing operation converting the color information of each pixel by shifting the saturation (S) of each pixel of the color image by a predetermined amount.
